(19) Europäisches Patentamt
European Patent Office
Office européen des brevets

(11) Veröffentlichungsnummer: **0 362 708 B1**

# (12) EUROPÄISCHE PATENTSCHRIFT

(45) Veröffentlichungstag der Patentschrift: **14.09.94**

(51) Int. Cl.[5]: **C09B 29/042**, C09B 29/048, C09B 29/36, D06P 1/18

(21) Anmeldenummer: **89118047.3**

(22) Anmeldetag: **29.09.89**

Die Akte enthält technische Angaben, die nach dem Eingang der Anmeldung eingereicht wurden und die nicht in dieser Patentschrift enthalten sind.

## (54) Thiazolazofarbstoffe mit einer Diazokomponente aus der Isothiazol- oder Thiadiazolreihe.

(30) Priorität: **01.10.88 DE 3833443**
**26.05.89 DE 3917258**

(43) Veröffentlichungstag der Anmeldung:
**11.04.90 Patentblatt 90/15**

(45) Bekanntmachung des Hinweises auf die Patenterteilung:
**14.09.94 Patentblatt 94/37**

(84) Benannte Vertragsstaaten:
**CH DE FR GB IT LI**

(56) Entgegenhaltungen:
**EP-A- 344 487**
**EP-A- 0 151 287**
**EP-A- 0 156 216**
**DE-A- 3 433 958**

(73) Patentinhaber: **BASF Aktiengesellschaft**
**Carl-Bosch-Strasse 38**
**D-67063 Ludwigshafen (DE)**

(72) Erfinder: **Hansen, Guenter, Dr.**
**Alwin-Mittasch-Platz 8**
**D-6700 Ludwigshafen (DE)**
Erfinder: **Lamm, Gunther, Dr.**
**Heinrich-Heine-Strasse 7**
**D-6733 Hassloch (DE)**
Erfinder: **Reichelt, Helmut, Dr.**
**Johann-Gottlieb-Fiechte-Strasse 56**
**D-6730 Neustadt (DE)**
Erfinder: **Schefczik, Ernst, Dr.**
**Dubliner Strasse 7**
**D-6700 Ludwigshafen (DE)**

EP 0 362 708 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Thiazolazofarbstoffe der Formel I

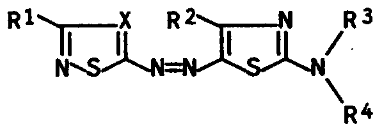

(I),

in der

X den Rest C-$R^5$, wobei $R^5$ für Cyano oder Thiocyanato steht,

$R^1$ $C_1$-$C_6$-Alkyl, einen Rest der Formel $R^6(-OC_2H_4)_n$, wobei $R^6$ für $C_1$-$C_6$-Alkyl, $C_5$-$C_7$-Cycloalkyl, Benzyl oder Phenyl und n für 1, 2, 3 oder 4 stehen, gegebenenfalls substituiertes Phenyl, Thienyl, $C_1$-$C_4$-Alkylthienyl,

$R^2$ $C_5$-$C_7$-Cycloalkyl, gegebenenfalls substituiertes Phenyl, Thienyl, $C_1$-$C_4$-Alkylthienyl,

$R^3$ $C_1$-$C_6$-Alkyl, durch Cyano oder Phenyl substituiertes $C_1$-$C_6$-Alkyl, $C_3$-$C_{12}$-Alkyl, dessen Alkylkette durch 1 bis 4 Sauerstoffatome unterbrochen und gegebenenfalls durch Phenyl oder Phenoxy substituiert ist, oder $C_1$-$C_4$-Alkoxy und

$R^4$ $C_3$-$C_{12}$-Alkyl, dessen Alkylkette durch 1 bis 4 Sauerstoffatome unterbrochen und gegebenenfalls durch Phenyl oder Phenoxy substituiert - ist, oder $R^3$ und $R^4$ zusammen mit dem sie verbindenden Stickstoffatom einen 5- oder 6-gliedrigen gesättigten heterocyclischen Rest, der gegebenenfalls weitere Heteroatome enthält, bedeuten,

sowie ihre Verwendung zum Färben von textilen Fasern.

Aus der DE-A-2 910 806 sowie der JP-A-151 653/1982 sind Azofarbstoffe bekannt, die als Kupplungskomponente ein Thiazolderivat aufweisen. Aus den älteren Patentanmeldungen DE-A-3 810 643 sowie DE-A-3 816 698 sind außerdem Thiazolazofarbstoffe mit einer Diazokomponente aus der Isothiazolreihe bekannt.

Außerdem sind in der EP-A-151 287, der EP-A-156 216 sowie der EP-A-344 487, wobei die letztgenannte Anmeldung für alle benennten Vertragsstaaten als Stand der Technik gemäß Art. 54 (3) EPÜ gilt, Isothiazolylazothiazolfarbstoffe beschrieben.

Aufgabe der vorliegenden Erfindung war es, neue Thiazolazofarbstoffe bereitzustellen, die eine Diazokomponente aus der Isothiazol- oder Thiadiazolreihe aufweisen und die über ein vorteilhaftes anwendungstechnisches Eigenschaftsprofil verfügen.

Demgemäß wurden die oben näher bezeichneten Thiazolazofarbstoffe der Formel I gefunden.

Alle in der obengenannten Formel I auftretenden Alkylgruppen können sowohl geradkettig als auch verzweigt sein.

Reste $R^1$, $R^2$, $R^3$ und $R^4$ sind z.B. Methyl, Ethyl, Propyl, Isopropyl, Butyl, Isobutyl, sec-Butyl, Pentyl, Isopentyl, Neopentyl, tert-Pentyl, Hexyl oder Isohexyl.

Reste $R^1$ sind weiterhin z.B. $CH_3OC_2H_4$, $C_2H_5OC_2H_4$, $C_6H_5CH_2OC_2H_4$, $C_6H_5OC_2H_4$, $C_6H_{11}OC_2H_4$, $CH_3(OC_2H_4)_2$, $C_2H_5(OC_2H_4)_2$, $C_6H_5CH_2(OC_2H_4)_2$, $C_6H_5(OC_2H_4)_2$,$C_6H_{11}(OC_2H_4)_2$, $CH_3(OC_2H_4)_3$, $C_2H_5$-$(OC_2H_4)_3$, $C_6H_5CH_2(OC_2H_4)_3$, $C_6H_5(OC_2H_4)_3$,$C_6H_{11}(OC_2H_4)_3$, $CH_3(OC_2H_4)_4$, $C_2H_5(OC_2H_4)_4$, $C_6H_5CH_2$-$(OC_2H_4)_4$, $C_6H_5(OC_2H_4)_4$ oder $C_6H_{11}(OC_2H_4)_4$.

Reste $R^2$ sind weiterhin z.B. Cyclopentyl, Cyclohexyl, 2-, 3- oder 4-Methylcyclohexyl oder Cycloheptyl.

Wenn $R^1$ oder $R^2$ substituiertes Phenyl bedeuten, so können als Substituenten beispielsweise $C_1$-$C_4$-Alkyl, $C_1$-$C_4$-Alkoxy, Cyano, Halogen, dabei insbesondere Chlor oder Brom, $C_1$-$C_4$-Alkanoylamino, Sulfamoyl oder $C_1$-$C_4$-Mono- oder Dialkylsulfamoyl, wobei die Alkylkette gegebenenfalls durch ein Sauerstoffatom unterbrochen ist, in Betracht kommen.

Reste $R^3$ und $R^4$ sind zusammen mit dem sie verbindenden Stickstoffatom, z.B. Pyrrolidino, Piperidino, Morpholino, Thiomorpholino, Piperazino oder, N-($C_1$-$C_4$-Alkyl)piperazino, wie N-Methyl- oder N-Ethylpiperazino.

Reste $R^3$ und $R^4$ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 2- oder 4-Butoxybutyl, 3,6-Dioxaheptyl, 3,6-Dioxaoctyl, 4,8-Dioxanonyl, 3,7-Diaxaoctyl, 3,7-Dioxanonyl, 4,7-Dioxaoctyl, 4,7-Dioxanonyl, 4,8-Dioxadecyl, 3,6,9-Trioxadecyl, 3,6,9-Trioxaundecyl, 3,6,9,12-Tetaoxatridecyl, 3,6,9,12-Tetraoxatetradecyl, 3-Benzyloxypropyl oder 6-Phenoxy-4-oxahexyl.

Reste $R^3$ sind weiterhin z.B. 2-Cyanoethyl oder 1- oder 2-phenylethyl.

Bevorzugt sind Thiozolazofarbstoffe der Formel I, in der X den Rest C-$R^5$ bedeutet, wobei $R^5$ für Cyano steht.

Besonders bevorzugt sind Thiazolazofarbstoffe der Formel I, in der $R^1$ gegebenenfalls substituiertes Phenyl oder einen Rest der Formel $R^6(-OC_2H_4)_n$, wobei $R^6$ für $C_1$-$C_4$-Alkyl, Cyclohexyl, Benzyl oder Phenyl und n für 1, 2 oder 3 stehen, $R^2$ Cyclohexyl, gegebenenfalls durch Methoxy substituiertes Phenyl oder Thienyl, $R^3$ $C_1$-$C_4$-Alkyl, $R^4$ $C_3$-$C_9$-Alkyl, dessen Alkylkette durch 1 bis 3 Sauerstoffatome unterbrochen und gegebenenfalls durch Phenoxy substituiert ist, und X den Rest C-CN bedeuten.

Insbesondere hervorzuheben sind Thiazolazofarbstoffe der Formel I, in der $R^1$ gegebenenfalls substituiertes Phenyl oder einen Rest der Formel $R^6(-OC_2H_4)_n$ bedeutet, wobei $R^6$ für Phenyl und n für 2 stehen.

Weiterhin insbesondere hervorzuheben sind Thiazolazofarbstoffe der Formel I, in der $R^4$ $C_1$-$C_2$-Alkoxyethyl, $C_1$-$C_2$-Alkoxypropyl, 3,6-Dioxaheptyl, 3,6-Dioxaoctyl, 4,7-Dioxaoctyl, 4,7-Dioxanonyl oder 6-Phenoxy-4-oxahexyl bedeutet.

Die Herstellung der erfindungsgemäßen Thiazolazofarbstoffe erfolgt nach an sich bekannter weise. Beispielsweise kann man ein 5-Aminoisothiazolderivat der Formel

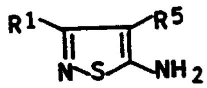

(II),

in der $R^1$ und $R^5$ jeweils die obengenannte Bedeutung besitzen, diazotieren und mit einem Thiazol der Formel III

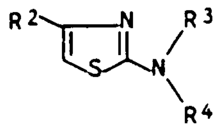

(III),

in der $R^2$, $R^3$ und $R^4$ jeweils die obengenannte Bedeutung besitzen, kuppeln.

5-Aminoisothiazole der Formel II sind bereits bekannt und z.B. in der älteren Patentanmeldung DE-A-3 804 394 beschrieben oder können analog zu der dort beschriebenen Herstellungsweise erhalten werden.

Bei den Thiazolen der Formel III handelt es sich im allgemeinen ebenfalls um bekannte Verbindungen. Sie sind z.B. in der US-A-3 770 719 oder in J.V. Metzger "Heteterocyclic Compounds - Thiazole and its Derivatives", Vol. 34, Part 1, Interscience Publ., John Wiley, New York, 1979, beschrieben oder können analog zu den dort genannten Methoden erhalten werden.

Weitere Einzelheiten der Herstellung der erfindungsgemäßen Farbstoffe können den Beispielen entnommen werden.

Im allgemeinen liegen die erfindungsgemäßen Farbstoffe der Formel I, die in den Resten $R^3$ und $R^4$ zusammen 5 oder mehr Sauerstoffatome aufweisen, bei Raumtemperatur in flüssigem Aggregatzustand vor.

Die neuen Thiazolazofarbstoffe der Formel I eignen sich in vorteilhafter Weise als Dispersionsfarbstoffe zum Färben von textilen Fasern, insbesondere von Celluloseestern oder Polyestern, aber auch von Polyamiden oder Mischgeweben aus Polyestern und Cellulosefasern.

Man erhält Färbungen mit guten Naßechtheiten.

Um einen günstigen Farbaufbau zu erreichen, kann es in manchen Fällen von Vorteil sein, Mischungen der erfindungsgemäßen Farbstoffe der Formel I zum Färben zu verwenden.

Die folgenden Beispiele sollen die Erfindung näher erläutern. Die Beispiele 1 und 2 beschreiben dabei die Herstellung der Kupplungskomponente.

Beispiel 1

300 ml Toluol, 100 ml Wasser und 5 g eines Phasentransferkatalysators wurden mit 98 g Natriumrhodanid versetzt. Dann tropfte man innerhalb von 1 Stunde 181 g Thiophen-2-carbonsäurechlorid hinzu und rührte das Gemisch 5 Stunden bei 20 bis 25°C. Der pH-Wert der Suspension wurde dabei bei 6 bis 7 gehalten. Danach tropfte man bei 20 bis 25°C in 1 Stunde 168 g Bis(2-methoxyethyl)amin hinzu, korrigierte dann den pH auf 7 bis 7,5 und rührte über Nacht nach. Danach wurden 350 ml Wasser und 200 g Natronlauge (50 Gew.%) zugesetzt und bei maximal 40°C 124 g Chloressigsäure zugegeben. Dann rührte man das Gemisch 5 Stunden unter Siedekühlung. Nach beendeter $CO_2$-Abspaltung wurde die wäßrige

Phase abgetrennt und die organische Phase zweimal mit Wasser ausgeschüttelt. Die organische Phase wurde einer Destillation unter vermindertem Druck (Badtemperatur: bis 155 °C) unterworfen. Man erhielt 250 g der Kupplungskomponente der Formel

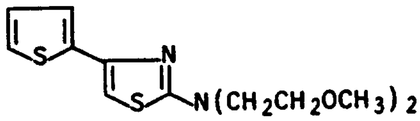

als braunes Öl.

Beispiel 2

Man verfuhr analog Beispiel 1 verwendete jedoch anstelle von Thiophen-2-carbonsäurechlorid 170 g Benzoylchlorid. Man erhielt 240 g der Kupplungskomponente der Formel

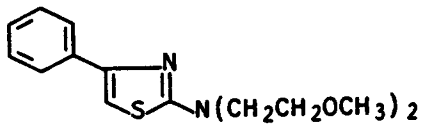

als zähflüssiges, grünliches Öl, das rasch zu einem farblosen, kristallinen Produkt erstarrte. Schmelzpunkt: 47 °C.

Beispiel 3

13,8 g 3-(2-Methoxyethyl)-4-cyano-5-aminoisothiazol wurden in 160 ml Eisessig und 35 ml Propionsäure gelöst. Dann kühlte man auf 0 bis 5 °C ab und tropfte bei dieser Temperatur 32 g 42 gew.%ige Nitrosylschwefelsäure zu und rührte 3 Stunden nach. Dann gab man das Gemisch in eine Lösung aus 29,7 g des Thiazols der Formel

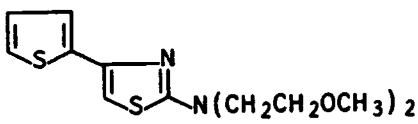

und 200 g Eisessig, 40 g Propionsäure und 30 ml wäßrige 10 gew.%ige Amidosulfonsäure-Lösung. Danach kühlte man auf 0 bis 5 °C ab. Die Kupplungsreaktion erfolgte sofort. Das Gemisch wurde durch Zugabe von ca. 800 ml Eiswasser und 200 g Eis rührbar gehalten. Nach Abpuffern mit Natriumacetat auf pH 0 bis 0,5 saugte man den ausgefallenen Farbstoff der Formel

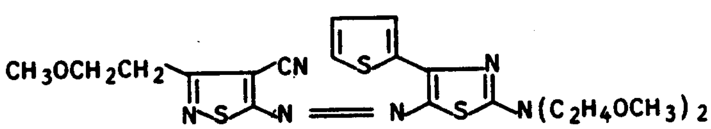

ab, wusch mit Wasser nach und trocknete. Man erhielt 47 g eines dunkelroten bis violetten Pulvers, das sich in N,N-Dimethylformamid mit rotstichig blauer Farbe löst und Polyethylenterephthalat-Gewebe in rotstichig blauen bis marineblauen Tönen färbt.

$\lambda_{max}$ 580 nm (N,N-Dimethylformamid/Eiessig 9:1 v/v).

Beispiel 4

13,8 g 3-(2-Methoxyethyl)-4-cyano-5-aminoisothiazol wurden analog Beispiel 3 diazotiert und mit 27,9 g des Thiazols der Formel

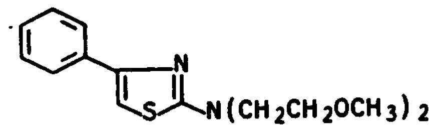

gekuppelt. Man erhielt 48 g eines dunkelroten Pulvers der Formel

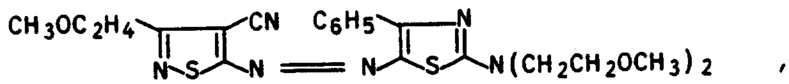

das sich in Aceton mit violetter Farbe löst und Polyethylenterephthalatgewebe in violetten Tönen mit vorzüglicher Lichtechtheit färbt. Der Farbstoff hat ein sehr gutes Aufbauvermögen.

$\lambda_{max}$: 554 nm (N,N-Dimethylformamid/Eisessig 9:1 v/v).

Beispiel 5

17,2 g 3-Methyl-4-thiocyanato-5-aminoisothiazol wurden bei ca. 45 °C in 220 g Eisessig und 48 g Propionsäure gelöst. Dann kühlte man auf 0 bis 5 °C ab, gab bei dieser Temperatur 32 g 42 gew.%ige Nitrosylschwefelsäure hinzu und rührte 3,5 Stunden bei 0 bis 5 °C nach. Die erhaltene Lösung wurde in ein Gemisch aus 29,2 g 2-Bis(2-methoxyethyl)amino-4-phenylthiazol, 50 g Eisessig und 10 g einer wäßrigen 10 gew.%igen Amidosulfonsäurelösung gegeben. Dazu gab man noch 8 g konz. Salzsäure und 400 g Eiswasser und kühlte mit Eis auf 0 °C ab. Das Kupplungsgemisch wurde mit verdünnter Natriumacetatlösung auf pH 0,8 bis 1 abgepuffert. Der ausgefallene Farbstoff der Formel

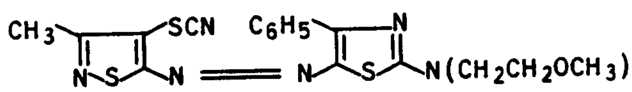

wurde abgesaugt, gewaschen und getrocknet. Man erhielt 42 g eines rotvioletten Pulvers, das sich in N,N-Dimethylformamid mit violetter Farbe löst und Polyethylenterephthalat in kräftigen bordoroten bis violetten Tönen färbt.

$\lambda_{max}$: 542 nm (N,N-Dimethylformamid/Eisessig 9:1 v/v).

Beispiel 6

20,7 g 3-(Thienyl-3-yl)-4-cyano-5-aminoisothiazol wurden in ein auf 0 °C abgekühltes Gemisch aus 125 g Schwefelsäure (71 gew.%ig), 22 g Eisessig und 32 g Nitrosylschwefelsäure (42 gew.%ig) unter Kühlen eingestreut. Man rührte die Diazotierung 4 Stunden bei 0 bis 5 °C nach und erhielt eine gelbe Suspension. Dieses Gemisch wurde bei <8 °C mit einer auf 0 bis 5 °C abgekühlten Lösung aus 42,4 g des Thiazols der Formel

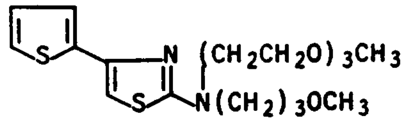

in 300 g Eisessig, 50 g Propionsäure, 50 g Eis und 1 g Amidosulfonsäure vereinigt. Beim Eintrag des Diazoniumsalzes wurden gleichzeitig etwas Eis und Eiswasser zugesetzt, so daß das Gemisch rührbar blieb.

Man rührte 10 Minuten bei ca. 0 °C nach und pufferte dann mit verdünnter, eiskalter Natronlauge auf pH 0,2 bis 0,4. Der Farbstoff der Formel

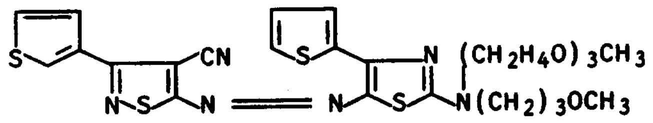

wurde analog Beispiel 5 isoliert. Er löst sich in N,N-Dimethylformamid mit marineblauem Farbton und färbt Polyethylenterephthalat in kräftigen, blauen Tönen an. $\lambda_{max}$: 588 nm (N,N-Dimethylformamid/Eisessig 9:1 v/v).

Die in den folgenden Tabellen 1 bis 4 aufgeführten Farbstoffe werden in analoger Weise erhalten.

Tabelle 1

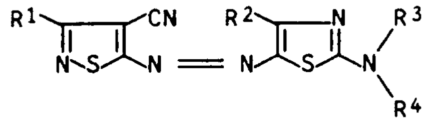

| Bsp. Nr. | $R^1$ | $R^2$ | $R^3$ | $R^4$ | Farbton |
|---|---|---|---|---|---|
| 7 | $C_6H_5$ | $C_6H_5$ | $C_2H_4OCH_3$ | $(C_2H_4O)_2OCH_3$ | violett |
| 8 | $C_2H_5OC_2H_4$ | $C_6H_5$ | $C_2H_4OCH_3$ | $C_2H_4OCH_3$ | blaustichig rot |
| 9 | $C_6H_5$ | $C_6H_5$ | $C_2H_4OCH_3$ | $C_3H_6OC_2H_4OCH_3$ | violett |
| 10 | $C_6H_5$ | $C_6H_5$ | $C_3H_6OCH_3$ | $C_3H_6OC_2H_4OCH_3$ | violett |
| 11 | $C_6H_5$ | $C_6H_5$ | $C_3H_6OCH_3$ | $(C_2H_4O)_3CH_3$ | violett |
| 12 | $C_6H_5$ | 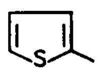 | $C_3H_6OCH_3$ | $(C_2H_4O)_2CH_3$ | rotstichig blau |
| 13 | $C_6H_5$ | 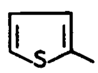 | $C_3H_6OCH_3$ | $(C_2H_4O)_3CH_3$ | rotstichig blau |
| 14 | $C_6H_5$ | 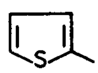 | $C_2H_5$ | $(C_2H_4O)_3CH_3$ | rotstichig blau |
| 15 | $C_6H_5$ | 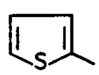 | $C_2H_5$ | $C_3H_6OC_2H_4OCH_3$ | rotstichig blau |
| 16 | $C_6H_5$ | 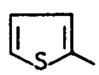 | $C_3H_7(n)$ | $C_3H_6OC_2H_4OCH_3$ | rotstichig blau |
| 17 | 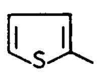 | 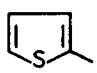 | $C_2H_5$ | $(C_2H_4O)_3CH_3$ | blau |
| 18 | 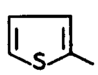 | 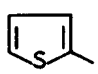 | $C_2H_4OCH_3$ | $(C_2H_4O)_2CH_3$ | rotstichig blau |
| 19 | 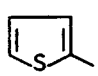 | 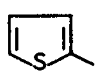 | $C_2H_4OCH_3$ | $(C_2H_4O)_3CH_3$ | rotstichig blau |
| 20 | 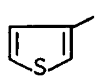 | 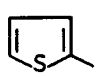 | $C_2H_4OCH_3$ | $(C_2H_4O)_3CH_3$ | rotstichig blau |
| 21 | 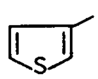 | 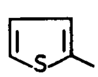 | $C_2H_4OCH_3$ | $(C_2H_4O)_2CH_3$ | blau |
| 22 | 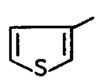 | 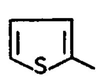 | $C_2H_5$ | $(C_2H_4O)_2CH_3$ | blau |
| 23 | 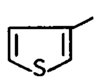 | 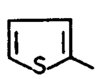 | $C_2H_5$ | $(C_2H_4O)_3CH_3$ | blau |

Tabelle 1 (Fortsetzung)

| Bsp. Nr. | $R^1$ | $R^2$ | $R^3$ | $R^4$ | Farbton |
|---|---|---|---|---|---|
| 24 | 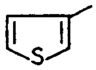 | 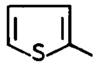 | $C_2H_5$ | $C_3H_6OC_2H_4OCH_3$ | blau |
| 25 | $(CH_3)_2CH$ | 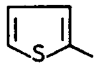 | $C_3H_7(n)$ | $C_3H_6OC_2H_4OCH_3$ | marineblau |
| 26 | $C_2H_5OC_2H_4$ | 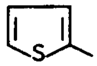 | $C_3H_7(n)$ | $C_3H_6OC_2H_4OCH_3$ | marineblau |

Tabelle 2

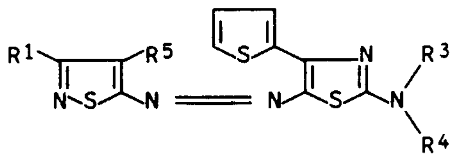

| Bsp. Nr. | $R^1$ | $R^3$ | $R^4$ | $R^5$ | Farbton |
|---|---|---|---|---|---|
| 27 | $CH_3$ | $C_2H_4OCH_3$ | $C_2H_4OCH_3$ | CN | rotstichig blau |
| 28 | $C_2H_5$ | $C_2H_4OCH_3$ | $C_2H_4OCH_3$ | CN | rotstichig blau |
| 29 | $C_3H_7(n)$ | $C_2H_4OCH_3$ | $C_2H_4OCH_3$ | CN | rotstichig blau |
| 30 | $(CH_3)_2CH$ | $C_2H_4OCH_3$ | $C_2H_4OCH_3$ | CN | rotstichig blau |
| 31 | $CH_3OC_2H_4$ | $C_2H_4OCH_3$ | $C_3H_6OCH_3$ | CN | marineblau |
| 32 | $CH_3OC_2H_4$ | $C_2H_4OCH_3$ | $C_3H_6OC_2H_5$ | CN | marineblau |
| 33 | $CH_3OC_2H_4$ | $C_2H_4OC_2H_5$ | $C_3H_6OC_2H_5$ | CN | marineblau |
| 34 | $CH_3OC_2H_4$ | $C_2H_4OC_2H_5$ | $C_3H_6OCH_3$ | CN | marineblau |
| 35 | $CH_3OC_2H_4$ | $C_2H_5$ | $C_3H_6OCH_3$ | CN | marineblau |
| 36 | $CH_3OC_2H_4$ | $C_2H_5$ | $C_3H_6OC_2H_4OCH_3$ | CN | marineblau |
| 37 | $CH_3OC_2H_4$ | $C_2H_5$ | $C_3H_6OC_2H_4OC_2H_5$ | CN | marineblau |
| 38 | $CH_3OC_2H_4$ | $C_2H_5$ | $(C_2H_4O)_2CH_3$ | CN | marineblau |
| 39 | $CH_3OC_2H_4$ | $C_3H_7(n)$ | $(C_2H_4O)_2CH_3$ | CN | marineblau |
| 40 | $CH_3OC_2H_4$ | $C_3H_7(n)$ | $C_3H_6OC_2H_4OCH_3$ | CN | marineblau |
| 41 | $CH_3$ | $C_2H_5$ | $C_3H_6OC_2H_4OCH_3$ | SCN | blauviolett |
| 42 | $CH_3$ | $C_2H_5$ | $C_3H_6OC_2H_4OCH_3$ | SCN | blauviolett |
| 43 | $CH_3$ | $C_2H_4OCH_3$ | $C_2H_4OCH_3$ | SCN | blauviolett |

Tabelle 3

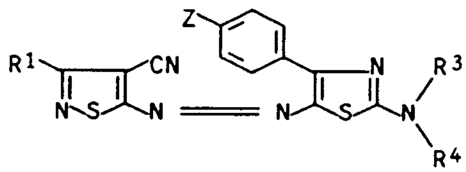

| Bsp. Nr. | $R^1$ | $R^3$ | $R^4$ | Z | Farbton |
|---|---|---|---|---|---|
| 44 | $CH_3$ | $C_2H_4OCH_3$ | $C_2H_4OCH_3$ | H | violett |
| 45 | $C_2H_5$ | $C_2H_4OCH_3$ | $C_2H_4OCH_3$ | H | violett |
| 46 | $(CH_3)_2CH$ | $C_2H_4OCH_3$ | $C_2H_4OCH_3$ | H | violett |
| 47 | $CH_3OC_2H_4$ | $C_3H_6OCH_3$ | $C_2H_4OCH_3$ | H | violett |
| 48 | $CH_3OC_2H_4$ | $C_2H_4OCH_3$ | $C_2H_4OCH_3$ | Cl | violett |
| 49 | $CH_3OC_2H_4$ | $C_3H_6OCH_3$ | $C_2H_5$ | H | violett |
| 50 | $CH_3OC_2H_4$ | $C_2H_5$ | $C_2H_4OC_2H_4OCH_3$ | H | violett |
| 51 | $CH_3OC_2H_4$ | $C_2H_5$ | $C_2H_4OC_2H_4OCH_3$ | Cl | violett |
| 52 | $CH_3OC_2H_4$ | $CH_3$ | $C_2H_4OC_2H_4OCH_3$ | H | violett |
| 53 | $CH_3OC_2H_4$ | $C_3H_6OC_2H_5$ | $C_2H_4OCH_3$ | H | violett |
| 54 | $CH_3OC_2H_4$ | $C_3H_6OC_2H_5$ | $CH_3$ | H | violett |
| 55 | $CH_3OC_2H_4$ | $C_2H_5$ | $C_2H_4OCH_3$ | $OCH_3$ | blauviolett |
| 56 | $CH_3$ | $C_2H_5$ | $C_2H_4OCH_3$ | $OCH_3$ | blauviolett |

Tabelle 4

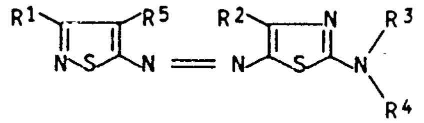

| Bsp. Nr. | R1 | R2 | R3 | R4 | R5 | Farbton |
|---|---|---|---|---|---|---|
| 44 | $CH_3$ | $C_6H_5$ | $C_2H_4OCH_3$ | $C_2H_4OCH_3$ | SCN | violett |
| 45 | $CH_3$ | $C_6H_5$ | $C_3H_6OCH_3$ | $C_2H_4OCH_3$ | SCN | violett |
| 46 | $C_6H_5$ | $C_6H_5$ | $C_3H_6OCH_3$ | $C_2H_4OCH_3$ | CN | violett |
| 47 | $C_6H_5$ | 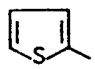 | $C_3H_6OCH_3$ | $C_2H_4OCH_3$ | CN | rotstichig blau |
| 48 | $C_6H_5$ | 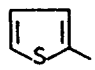 | $C_3H_6OCH_3$ | $C_2H_4OCH_3$ | SCN | rotstichig blau |
| 49 | $CH_3$ | 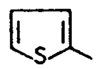 | $C_3H_6OCH_3$ | $C_2H_4OCH_3$ | SCN | rotstichig blau |
| 50 | $CH_3$ | 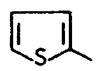 | $C_2H_4OCH_3$ | $C_2H_4OCH_3$ | SCN | violett |
| 51 | $C_6H_5$ | 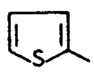 | $C_3H_6OCH_3$ | $(C_2H_4O)_2C_2H_5$ | CN | rotstichig blau |
| 52 | $C_6H_5-CH_2$ | $C_6H_5$ | $C_3H_6OCH_3$ | $(C_2H_4O)_2C_2H_5$ | CN | violett |
| 53 | $CH_3OC_2H_4$ | 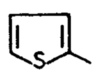 | $C_3H_6OCH_3$ | $C_3H_6OCH_3$ | CN | marineblau |
| 54 | $C_2H_5OC_2H_4$ | 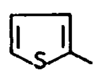 | $C_3H_6OCH_3$ | $C_3H_6OCH_3$ | CN | marineblau |
| 55 | $C_2H_5OC_2H_4$ | 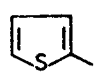 | $C_3H_6OCH_3$ | $C_2H_4OCH_3$ | CN | marineblau |
| 56 | 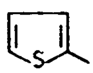 | 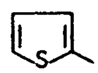 | $C_2H_4OC_2H_5$ | $C_3H_6OCH_3$ | CN | blau |
| 57 | 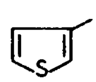 | 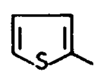 | $C_3H_6OCH_3$ | $C_3H_6OC_2H_5$ | CN | blau |

Beispiel 58 (nicht erfindungsgemäß)

13,9 g 3-Methyl-4-cyano-5-aminoisothiazol wurden bei 50 °C in einem Gemisch aus 210 ml Eisessig und 50 ml Propionsäure gelöst. Dann kühlte man auf 10 °C ab und tropfte 14 g konzentrierte Schwefelsäure und danach bei 0 bis 4 °C 32 g Nitrosylschwefelsäure (45 gew.%ig) hinzu. Nach 3-stündigem Rühren bei 0 bis 5 °C erhielt man eine klare Diazoniumsalzlösung. Diese ließ man unter gutem Rühren zu 30 g der Kupplungskomponente der Formel

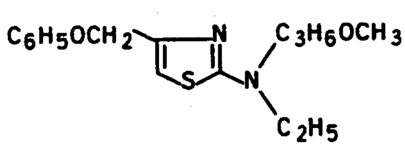

,

gelöst in einem auf 0 bis 5 °C abgekühlten Gemisch aus 150 g Eisessig, 40 g Propionsäure und 0,5 g Harnstoff, zulaufen. Dabei wurde die Temperatur durch Kühlung bei ≦5 °C gehalten. Danach pufferte man das Gemisch durch Zugabe von Natriumacetat bei ≦5 °C so ab, daß die freie Schwefelsäure gebunden wurde (pH-Wert des Gemisches ca. 0,5 bis 1,5). Der entstandene Farbstoff der Formel

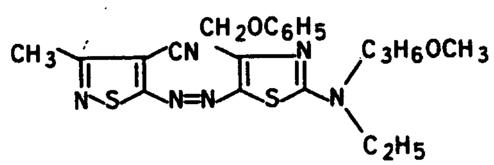

wurde durch Zugabe von Wasser ausgefällt, abgesaugt, gewaschen und getrocknet. Ausbeute: 43 g.

Der Farbstoff löst sich in N,N-Dimethylformamid mit blaustichig roter Farbe und färbt Polyestergewebe in lichtechten, blaustichig roten Tönen an. Das Absorptionsmaximum, gemessen in einem Gemisch aus N,N-Dimethylformamid und Eisessig (9:1 v/v), beträgt 526 nm.

Beispiel 59

13,9 g 3-Methyl-4-cyano-5-aminoisothiazol wurden analog Beispiel 58 diazotiert und mit 29 g der Kupplungskomponente der Formel

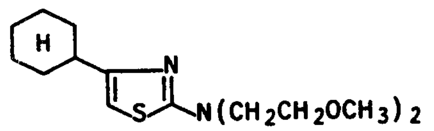

,

die bei 2 °C in einem Gemisch aus 150 g Eisessig und 40 g Propionsäure gelöst worden war, vereinigt. Danach streute man unter Rühren und Kühlen bei ≦6 °C 35 g trockenes Natriumacetat ein, wodurch die Kupplungsreaktion ausgelöst wurde.

Nach beendeter Umsetzung wurde der entstandene Farbstoff der Formel

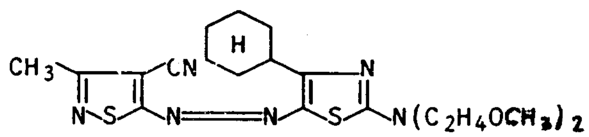

,

mit Wasser ausgefällt und analog Beispiel 1 isoliert. Man erhielt 42 g eines dunkelroten Pulvers, das sich in N,N-Dimethylformamid mit leicht blaustichig rotem Farbton löst und Polyestergewebe in blaustichig-roten Tönen mit sehr guten Echtheiten färbt. Das UV-Spektrum hat im sichtbaren Spektralbereich einen fast symmetrischen Kurvenverlauf. Das Absorptionsmaximum beträgt 525 nm.

Die in den folgenden Tabellen 6, 7 und 8 aufgeführten Farbstoffe werden in analoger Weise erhalten.

Tabelle 6

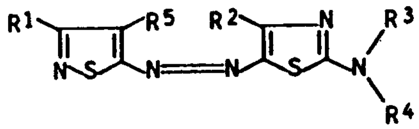

| Bsp. Nr. | $R^1$ | $R^5$ | $R^2$ | $R^3$ | $R^4$ | Farbton |
|---|---|---|---|---|---|---|
| 60 | $CH_3$ | SCN | 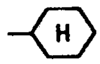 | $C_2H_5$ | $C_3H_6OCH_3$ | rot |
| 61 | $C_2H_5$ | CN | 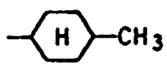 | $C_2H_4OCH_3$ | $C_3H_6OC_2H_4OCH_3$ | blaust. rot |
| 62 | $CH_3$ | CN | 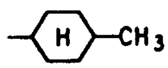 | $C_2H_4OCH_3$ | $C_3H_6OC_2H_4OCH_3$ | blaust. rot |

Tabelle 7

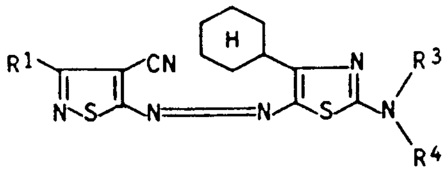

| Bsp. Nr. | $R^1$ | $R^3$ | $R^4$ | Farbton |
|---|---|---|---|---|
| 63 | $CH_3$ | $C_2H_5$ | $C_2H_4OCH_3$ | rot |
| 64 | $CH_3$ | $CH_3$ | $C_3H_6OCH_3$ | blaust. rot |
| 65 | $CH_3$ | $C_2H_4OCH_3$ | $C_3H_6OCH_3$ | blaust. rot |
| 66 | $CH_3$ | $C_2H_5$ | $C_2H_4OC_2H_5$ | blaust. rot |
| 67 | $CH_3$ | $C_3H_6OCH_3$ | $C_3H_6OCH_3$ | blaust. rot |
| 68 | $CH_3$ | $C_2H_5$ | $C_3H_6OC_2H_4OCH_3$ | blaust. rot |
| 69 | $C_2H_5$ | $C_2H_5$ | $C_3H_6OC_2H_4OCH_3$ | blaust. rot |
| 70 | $CH_3OC_2H_4$ | $C_2H_5$ | $C_2H_4OCH_3$ | blaust. rot |
| 71 | $CH_3OC_2H_4$ | $C_2H_5$ | $C_3H_6OCH_3$ | blaust. rot |
| 72 | $C_6H_5$ | $C_2H_5$ | $C_3H_6OC_2H_4OCH_3$ | blaust. rot |
| 73 | 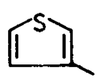 | $C_2H_5$ | $C_3H_6OC_2H_4OCH_3$ | blaust. rot |
| 74 | 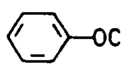$-OC_2H_4OC_2H_4$ | $C_2H_5$ | $C_2H_4OCH_3$ | blaust. rot |
| 75 | 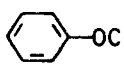$-OC_2H_4OC_2H_4$ | $C_2H_5$ | $C_3H_6OCH_3$ | blaust. rot |
| 76 | $CH_3OC_2H_4$ | $C_2H_5$ | $C_3H_6OC_2H_4OC_6H_5$ | blaust. rot |
| 77 | $CH_3$ | $C_2H_5$ | $C_3H_6OC_2H_4OC_6H_5$ | blaust. rot |
| 78 | $CH_3OC_2H_4$ | $CH_2CH_2-O-CH_2CH_2$ | | blaust. rot |
| 79 | $CH_3(OC_2H_4)_2$ | $CH_2CH_2-O-CH_2CH_2$ | | blaust. rot |
| 80 | 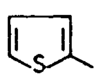 | $C_2H_5$ | $C_3H_6OC_2H_4OCH_3$ | blaust. rot |

Tabelle 8

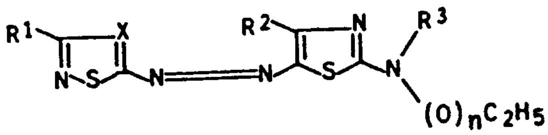

| Bsp. Nr. | $R^1$ | $R^2$ | $R^3$ | X | n | $\lambda max$ [nm] |
|---|---|---|---|---|---|---|
| 81 | $CH_3$ | 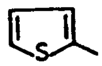 | $CH_2(C_2H_4O)_2C_6H_5$ | C-CN | 0 | 581 |
| 82 | $CH_3O-C_2H_4$ | 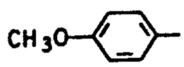 | $C_2H_4OCH_3$ | C-CN | 0 | 569 |
| 83 | $CH_3OC_2H_4$ | 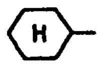 | $C_3H_6OCH_3$ | C-CN | 0 | 528 |

Tabelle 8 (Forts.)

| Bsp. Nr | $R^1$ | $R^2$ | $R^3$ | X | n | $\lambda max$ [nm] |
|---|---|---|---|---|---|---|
| 84 | 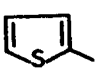 | 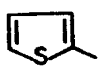 | $CH_2(C_2H_4O)_2CH_3$ | C-CN | 0 | 592 |
| 85 | 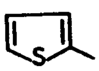 | 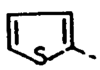 | $CH_2(C_2H_4O)_2CH_3$ | C-CN | 0 | 588 |
| 86 | 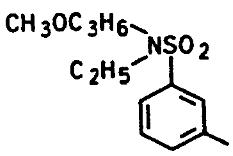 | 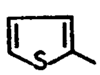 | $C_2H_4OCH_3$ | C-CN | 0 | 590 |
| 87 | 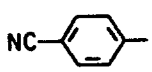 | 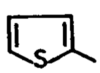 | $CH_2(C_2H_4O)_2C_2H_5$ | C-CN | 0 | 584 |
| 88 | 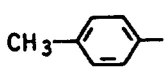 | 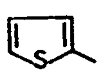 | $CH_2(C_2H_4O)_2CH_3$ | C-CN | 0 | 589 |
| 89 | 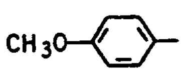 | 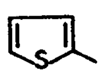 | $CH_2(C_2H_4O)_2CH_3$ | C-CN | 0 | 590 |
| 90 | 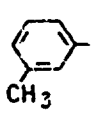 | 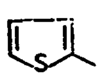 | $CH_2(C_2H_4O)_2CH_3$ | C-CN | 0 | 590 |

## Patentansprüche

1. Thiazolazofarbstoffe der Formel I

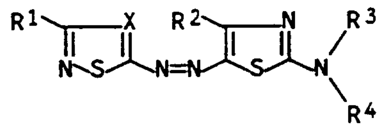

(I),

in der

| | |
|---|---|
| X | den Rest C-$R^5$, wobei $R^5$ für Cyano oder Thiocyanato steht, |
| $R^1$ | $C_1$-$C_6$-Alkyl, einen Rest der Formel $R^6(-OC_2H_4)_n$, wobei $R^6$ für $C_1$-$C_6$-Alkyl, $C_5$-$C_7$-Cycloalkyl, Benzyl oder Phenyl und n für 1, 2, 3 oder 4 stehen, gegebenenfalls substituiertes Phenyl, Thienyl, $C_1$-$C_4$-Alkylthienyl, |
| $R^2$ | $C_5$-$C_7$-Cycloalkyl, gegebenenfalls substituiertes Phenyl, Thienyl, $C_1$-$C_4$-Alkylthienyl, |
| $R^3$ | $C_1$-$C_6$-Alkyl, durch Cyano oder Phenyl substituiertes $C_1$-$C_6$-Alkyl, $C_3$-$C_{12}$-Alkyl, dessen Alkylkette durch 1 bis 4 Sauerstoffatome unterbrochen und gegebenenfalls durch Phenyl oder Phenoxy substituiert ist, oder $C_1$-$C_4$-Alkoxy und |
| $R^4$ | $C_3$-$C_{12}$-Alkyl, dessen Alkylkette durch 1 bis 4 Sauerstoffatome unterbrochen und gegebenenfalls durch Phenyl oder Phenoxy substituiert ist, oder $R^3$ und $R^4$ zusammen mit dem sie verbindenden Stickstoffatom einen 5- oder 6-gliedrigen gesättigten heterocyclischen Rest, der gegebenenfalls weitere Heteroatome enthält, bedeuten, |

2. Thiazolazofarbstoffe gemäß Anspruch 1, dadurch gekennzeichnet, daß X den Rest C-$R^5$ bedeutet, wobei $R^5$ für Cyano steht.

3. Thiazolazofarbstoffe gemäß Anspruch 1, dadurch gekennzeichnet, daß $R^1$ gegebenenfalls substituiertes Phenyl oder einen Rest der Formel $R^6(-OC_2H_4)_n$, wobei $R^6$ für $C_1$-$C_4$-Alkyl, Cyclohexyl, Benzyl oder Phenyl und n für 1, 2 oder 3 stehen, $R^2$ Cyclohexyl, gegebenenfalls durch Methoxy substituiertes Phenyl oder Thienyl, $R^3$ $C_1$-$C_4$-Alkyl, $R^4$ $C_3$-$C_9$-Alkyl, dessen Alkylkette durch 1 bis 3 Sauerstoffatome unterbrochen und gegebenenfalls durch Phenoxy substituiert ist, und X den Rest C-CN bedeuten.

4. Verwendung der Thiazolazofarbstoffe gemäß Anspruch 1 zum Färben von textilen Fasern.

## Claims

1. A thiazoleazo dye of the formula I

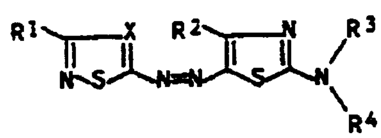

(I),

where X is a radical C-$R^5$, $R^5$ being cyano or thiocyanato, $R^1$ is $C_1$-$C_6$-alkyl, a radical of the formula $R^6(-OC_2H_4)_n$, $R^6$ being $C_1$-$C_6$-alkyl, $C_5$-$C_7$-cycloalkyl, benzyl or phenyl and n being 1, 2, 3 or 4, unsubstituted or substituted phenyl, thienyl or $C_1$-$C_4$-alkylthienyl, $R^2$ is $C_5$-$C_7$-cycloalkyl, unsubstituted or substituted phenyl, thienyl or $C_1$-$C_4$-alkylthienyl, $R^3$ is $C_1$-$C_6$-alkyl, $C_1$-$C_6$-alkyl which is substituted by cyano or phenyl, $C_3$-$C_{12}$-alkyl whose alkyl chain is interrupted by from 1 to 4 oxygen atoms and may be substituted by phenyl or phenoxy, or $C_1$-$C_4$-alkoxy and $R^4$ is $C_3$-$C_{12}$-alkyl whose alkyl chain is interrupted by from 1 to 4 oxygen atoms and may be substituted by phenyl or phenoxy, or $R^3$ and $R^4$, together with the nitrogen atom which links them, form a 5-membered or 6-membered saturated heterocyclic radical which may contain further heteroatoms.

2. A thiazoleazo dye as claimed in claim 1, wherein X is a radical C-$R^5$, where $R^5$ is cyano.

3. A thiazoleazo dye as claimed in claim 1, wherein $R^1$ is unsubstituted or substituted phenyl or a radical of the formula $R^6(-OC_2H_4)_n$, where $R^6$ is $C_1$-$C_4$-alkyl, cyclohexyl, benzyl or phenyl and n is 1, 2 or 3, $R^2$ is cyclohexyl, unsubstituted or methoxy-substituted phenyl or thienyl, $R^3$ is $C_1$-$C_4$-alkyl, $R^4$ is $C_3$-$C_9$-alkyl whose alkyl chain is interrupted by from 1 to 3 oxygen atoms and may be substituted by phenoxy, and X is C-CN.

4. Use of a thiazoleazo dye as claimed in claim 1 for dyeing textile fibers.

## Revendications

1. Colorants azo de la série du thiazole de formule I

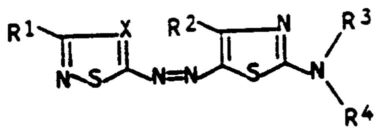

(I),

dans laquelle

- X représente le reste C-$R^5$ où $R^5$ est mis pour un groupement cyano ou thiocyanato,
- $R^1$ représente un groupement alkyle en $C_1$-$C_6$, un reste de formule $R^6(-OC_2H_4)_n$ où $R^6$ est mis pour un groupement alkyle en $C_1$-$C_6$, cycloalkyle en $C_5$-$C_7$, benzyle ou phényle et n pour 1, 2, 3 ou 4, phényle éventuellement substitué, thiényle, (alkyl en $C_1$-$C_4$)thiényle,
- $R^2$ représente un groupement cycloalkyle en $C_5$-$C_7$,phényle éventuellement substitué, thiényle, (alkyl en $C_1$-$C_4$)thiényle,
- $R^3$ représente un groupement alkyle en $C_1$-$C_6$, un groupement alkyle en $C_1$-$C_6$ substitué par un groupement cyano ou un groupement phényle, un groupement alkyle en $C_3$-$C_{12}$ dont la chaîne alkyle est interrompue par 1 a 4 atomes d'oxygène et éventuellement substituée par un groupement phényle ou phénoxy, ou un groupement alcoxy en $C_1$-$C_4$ et
- $R^4$ est un groupement alkyle en $C_3$-$C_{12}$ dont la chaîne alkyle est interrompue par 1 a 4 atomes d'oxygène et éventuellement substituée par un groupement phényle ou phénoxy, ou bien $R^3$ et $R^4$ ensemble avec l'atome d'azote auquel ils sont liés forment un reste hétérocyclique saturé à 5 ou 6 chaînons qui peut éventuellement comprendre d'autres hétéroatomes.

2. Colorants azo de la série du thiazole selon la revendication 1, caractérisés en ce que X représente le reste C-$R^5$ où $R^5$ est mis pour un groupement cyano.

3. Colorants azo de la série du thiazole selon la revendication 1, caractérisés en ce que $R^1$ représente un groupement phényle éventuellement substitué ou un reste de forme $R^6(-OC_{32}H_4)_n$ où $R^6$ est mis pour un groupement alkyle en $C_1$-$C_4$, cyclohexyle, benzyle ou phényle et n pour 1, 2 ou 3, $R^2$ est mis pour un groupement cyclohexyle, un groupement phényle éventuellement substitué par un groupement méthoxy ou un groupement thiényle, $R^3$ est un groupement alkyle en $C_1$-$C_4$, $R^4$ est un groupement alkyle en $C_3$-$C_9$ dont la chaîne alkyle est interrompue par 1 à 3 atomes d'oxygène et est éventuellement substituée par un groupement phénoxy, et X représente le reste C-CN.

4. Utilisation des colorants azo de la série du thiazole selon la revendication 1 pour la teinture de fibres textiles.